# EUROPÄISCHE PATENTSCHRIFT

(11) **EP 1 284 879 B1**
(45) Veröffentlichungstag und Bekanntmachung des Hinweises auf die Patenterteilung: **08.08.2007**
(21) Anmeldenummer: 01940518.2
(22) Anmeldetag: 22.05.2001
(51) Int. Cl.: B60J 7/04, B60J 7/20

(54) **FAHRZEUG MIT EINEM ZU ÖFFNENDEN FAHRZEUGDACH**
VEHICLE WITH A VEHICLE ROOF THAT CAN BE OPENED
VEHICULE EQUIPE D'UN PAVILLON OUVRANT

(30) Priorität: 23.05.2000 DE 10025051
(43) Veröffentlichungstag der Anmeldung: 26.02.2003
(73) Patentinhaber: Webasto Vehicle Systems International GmbH, 82131 Stockdorf (DE)
(72) Erfinder: de GAILLARD, François, F-85390 Mouilleron-en-Pareds (FR)
(74) Vertreter: Konnerth, Dieter Hans
(86) Internationale Anmeldenummer: PCT/EP2001/005877
(87) Internationale Veröffentlichungsnummer: WO 2001/089869

(56) Entgegenhaltungen:
- EP-A- 0 101 322
- US-A- 2 263 216
- US-A- 2 785 922
- US-A- 4 968 089

## Beschreibung

Die Erfindung betrifft ein Fahrzeug mit den Merkmalen des Oberbegriffs des Anspruchs 1.

Beim Fahren in einem offenen Personenkraftwagen wie z. B. einem Cabriolet besteht bei einem Unfall mit Überschlag des Fahrzeugs ein hohes Verletzungsrisiko für die Fahrzeuginsassen. Zum Insassenschutz bei geöffnetem Dach werden daher bei Cabrios feste oder ausfahrbare Überrollbügel eingebaut. Limousinen und Coupés bieten eine hohe Sicherheit bei einem Überschlag, jedoch ist auch bei Einbau eines öffnungsfähigen Daches, z. B. eines Schiebedaches, nur eine begrenzte Dachöffnung möglich, die ein Fahrgefühl wie beim Fahren eines offenen Cabriolets üblicherweise nicht vermitteln kann.

Die EP-A-101 322 offenbart ein gattungsbildendes Fahrzeug mit einem bewegbar gelagerten Deckel und einer Heckscheibe, die ebenfalls verschiebbar gelagert ist, wobei der Deckel an seitlichen Führungsschienen, die sich von der Dachöffnung nach hinten bis in die Kofferraumklappe erstrecken, und die Heckscheibe an einem weiteren Paar seitlicher Führungsschienen, die sich von der die Heckscheibe aufnehmenden Öffnung nach hinten bis in die Kofferraumklappe erstrecken, gelagert sind. Da der Deckel wie auch die Heckscheibe an ihren eigenen Führungsschienen unabhängig voneinander gelagert sind, können unabhängig voneinander der Deckel und/oder die Heckscheibe in ihre jeweilige Offenstellung in die Kofferraumklappe verlagert werden, in der sie übereinander angeordnet sind. In ihren Offenstellungen sind der Deckel wie auch die Heckscheibe in der Kofferraumklappe und damit im Kofferraum angeordnet, so dass der entsprechende Raum nicht für Ladezwecke zur Verfügung steht.

In der EP 0 591 644 B1 ist ein Fahrzeug mit einem Fahrzeugdach beschrieben, das eine Dachöffnung aufweist, die mittels Lamellen eines Lamellendaches wahlweise verschließbar oder zumindest teilweise zu öffnen ist. Zum Öffnen der Dachöffnung werden die an beidseitigen dachfesten Führungen verschiebbar gelagerten Lamellen nach hinten unter einen sich an die Dachöffnung nach hinten anschließenden festen Dachteil bewegt. In der Ablagestellung können die Lamellen zu einem Paket von relativ geringer Höhe gestapelt sein oder sie sind in gegenseitigem Höhenabstand jalousieartig vor einer Heckscheibe angeordnet.

Aus der FR 2 718 485 A ist ein Schiebehimmel für ein geschlossenes durchsichtiges Fahrzeugdach bekannt geworden. Der Schiebehimmel enthält einzelne Lamellen, die an beidseitigen Dachlängsführungen verschiebbar gelagert sind. Beim Öffnen des Schiebehimmels werden die einzelnen Lamellen nach hinten unter das durchsichtige Fahrzeugdach in eine Ablagestellung verschoben, in der sie als Paket übereinander angeordnet sind.

In der DE 196 34 507 C1 ist ein in ein Fahrzeugheck eines Personenkraftwagens versenkbares Fahrzeugdach beschrieben. Eine bewegliche Dachanordnung, die wahlweise zum Verschließen oder Freigeben einer Dachöffnung vorgesehen ist, ist insbesondere als Lamellendach gestaltet, das beim Öffnen an einem Dachrahmen paketförmig zusammenlegbar und mit dem Fahrzeugdach im Fahrzeugheck versenkbar ist.

Aufgabe der Erfindung ist es, ein eingangs genanntes Fahrzeug zu schaffen, dessen Fahrzeugdach großflächig zu öffnen ist und dennoch eine hohe Steifigkeit als Insassenschutz bei einem Fahrzeugüberschlag aufweist. Des weiteren sollen die aus der Dachöffnung entfernten Elemente raumsparend abgelegt werden.

Die Aufgabe wird bei dem eingangs genannten Fahrzeug erfindungsgemäß dadurch gelöst, dass in der Offenstellung die Heckscheibe auf der Kofferraumklappe und der Deckel auf der Heckscheibe angeordnet sind.

Auf diese Weise läßt sich eine Dachöffnung bilden, die sich wie bei einem Cabriolet von einer Frontscheibe bis zu der Kofferraumklappe über den gesamten Fahrgastinnenraum erstreckt, wobei jedoch gegenüber einem Cabriolet die Dachlängsholme in ihrer karosseriefesten Anordnung verbleiben und damit einen verbesserten Insassenschutz bereitstellen, falls sich das Fahrzeug überschlägt und auf dem Dach zu liegen kommt. Die Dachlängsholme sind über hintere Dachsäulen wie z. B. die C-Säulen an der Karosserie befestigt. Die Ablage auf der Kofferraumklappe benötigt keinen Raum im Fahrzeuginnenraum oder im Kofferraum.

Vorteilhafte Ausgestaltungen der Erfindung sind in den Unteransprüchen angegeben.

Nachfolgend wird ein Ausführungsbeispiel des Fahrzeugs unter Bezugnahme auf Zeichnungen näher erläutert. Es zeigt:
- Fig. 1: in einer perspektivischen Heckansicht ein Ausführungsbeispiel eines Fahrzeugs mit einem bewegbaren Deckel und einer bewegbaren Heckscheibe in Schließstellung;
- Fig. 2: in einer perspektivischen Heckansicht gemäß Fig. 1 das Fahrzeug mit offenem Dach und der Heckscheibe und dem Deckel in Übereinanderanordnung auf einer Kofferraumklappe;
- Fig. 3: in den Ansichten (a) bis (e) in einem Längsschnitt in schematischer Darstellung das Fahrzeug in unterschiedlichen Stellungen des Deckels und der Heckscheibe;
- Fig. 4: in den Ansichten (a) bis (e) in einem Längsschnitt in schematischer Darstellung das Fahrzeug mit einer weiteren Dachausführung in unterschiedlichen Stellungen des Deckels und der Heckscheibe; und
- Fig. 5: in einem Längsschnitt in schematischer Darstellung das Fahrzeug mit dem Deckel und der Heckscheibe in Schließstellung.

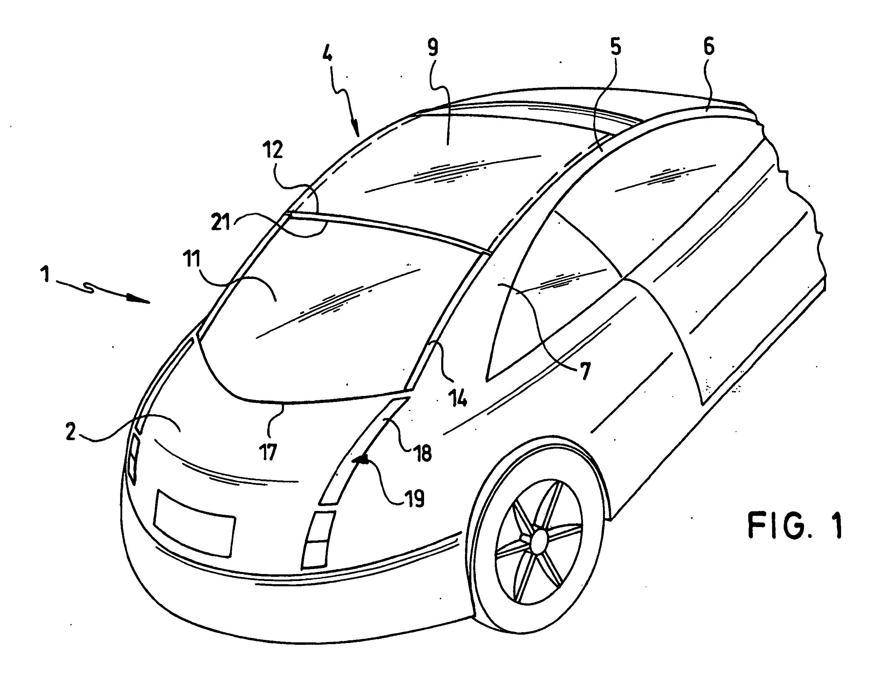

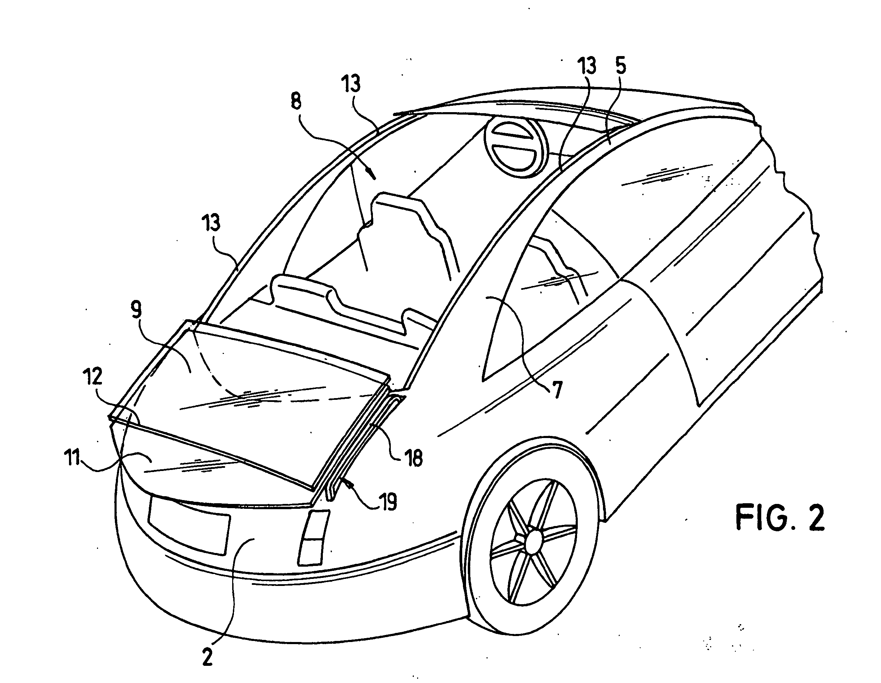

Ein Fahrzeug 1 (siehe Fig. 1 bis 3), das im Ausführungsbeispiel ein Personenkraftwagen in der Art eines Coupés mit einem mittels einer Kofferraumklappe 2 verschließbaren Kofferraum 3 ist, weist ein Fahrzeugdach 4 mit seitlichen Dachlängsholmen 5 auf, die sich vorne an die A-Säulen 6 anschließen und hinten in die C-Säulen 7 übergehen. Zwischen den Dachlängsholmen 5 erstreckt sich eine Dachöffnung 8, die von einem bewegbar gelagerten Deckel 9, insbesondere einem Glasdeckel, wahlweise verschlossen (siehe Fig. 1) oder zumindest teilweise freigegeben ist (Fig. 2). Die Dachöffnung 8 erstreckt sich nach hinten zwischen den Dachlängsholmen 5 bzw. den C-Säulen 7 weiter bis an den Kofferraum 3 oder die Kofferraumklappe 2 und ist in diesem Bereich eine Heckscheibenöffnung 10, die von einer bewegbaren Heckscheibe 11 wahlweise verschlossen (siehe Fig. 1) oder zumindest teilweise freigegeben ist (Fig. 2).

Der Deckel 9 ist über eine Führungseinrichtung an den Dachlängsholmen 5 verschiebbar gelagert und fährt beim Öffnen mit seinem angehobenen Hinterrand 12 über die Heckscheibe 11, wobei ein seitliches hinteres Gleitelement des Deckels 9 entweder an einer Führungsschiene 13 am Dachlängsholm 5 bzw. der C-Säule 7 oder an einer Führungsschiene 14 an der Heckscheibe 11 geführt ist. Der Deckel 9 kann in Zwischenöffnungsstellungen positioniert werden, in denen er die Dachöffnung 8 teilweise freigibt, oder er wird vollständig über die Heckscheibe 11 gefahren.

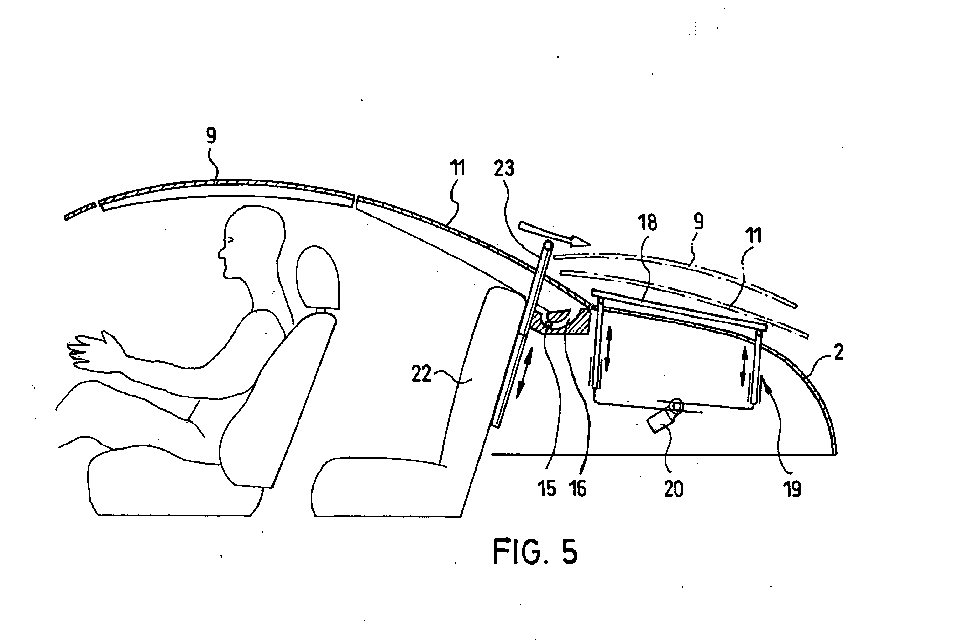

Zum weiteren Öffnen der Dachöffnung 8 wird die Heckscheibe 11, die seitlich jeweils über ein vorderes Gleitelement an der Führungsschiene 13 am Dachlängsholm 5 bzw. der C-Säule 7 und über ein hinteres Gleitelement 15 (siehe Fig. 5) an einer Kulissenführung 16 verschiebbar gelagert ist, zusammen mit dem Deckel 9 durch eine Antriebseinrichtung nach hinten auf den Kofferraumdeckel 2 verschoben. Dabei gleitet anfangs das hintere Gleitelement 15 auf einem ansteigenden Abschnitt der Kulissenführung 16, so dass der Hinterrand 17 der Heckscheibe 11 und damit auch die Heckscheibe 11 aus einer Scheibendichtung angehoben wird. Anschließend kommt das hintere Gleitelement 15 oder ein anderes Führungsmittel der Heckscheibe 11 in Eingriff mit einer Führungseinrichtung an der Kofferraumklappe 2. Die Führungseinrichtung ist beispielsweise eine in der Fläche der Kofferraumklappe 2 oder darunter versenkt angeordnete, in Längsrichtung verlaufende Führungsschiene (nicht dargestellt), in der das Führungsmittel bzw. das hintere Gleitelement 15 verschiebbar aufgenommen ist. Das Gleitelement 15 weist einen derart dimensionierten Lagerfuß auf, dass die Heckscheibe 11 von der Oberfläche der Kofferraumklappe 2 beabstandet gehalten ist.

In einer bevorzugten Ausgestaltung ist die Führungsschiene 18 an einer Trägereinrichtung 19 angeordnet, die in der Kofferraumklappe 2 bewegbar gelagert ist. In der Schließstellung (siehe Fig. 1) ist die Trägereinrichtung 19 abgesenkt oder versenkt, so dass die Führungsschiene 18 in der Fläche der Kofferraumklappe 2 angeordnet ist oder darunter versenkt ist und insbesondere von einer Abdeckung abgedeckt ist. Die Trägereinrichtung 19 wird beispielsweise durch einen Antrieb mittels eines Elektromotors 20 (siehe Fig. 5) ausgefahren, um die Heckscheibe 11 aufzunehmen und in der Offenstellung zu,lagern (siehe Fig. 2).

Die Trägereinrichtung 19 kann alternativ in ihrer Position oberhalb der Oberfläche der Kofferraumklappe 2 auch fest angeordnet sein.

Die Heckscheibe 11 mit dem darauf ruhenden Deckel 9 ist in Offenstellung sowohl mit dem hinteren wie auch mit dem vorderen Gleitelement vollständig an der Führungsschiene 18 in einer derartigen Stellung gelagert, dass die Kofferraumklappe 2 in üblicher Weise durch Hochschwenken zu öffnen ist, wobei je nach Art des Antriebes beispielsweise ein Antriebskabel von der Kofferraumklappe 2 zur Karosserie führt.

In einer alternativen Gestaltung bleibt das vordere Lager- oder Gleitelement der Heckscheibe 11 in der Offenstellung der Heckscheibe 11 an der Führungsschiene 13 am Dachlängsholm 5 bzw. der C-Säule 7 gelagert. Das vordere Lager- oder Gleitelement enthält ein Schwenkgelenk, das ein Verschwenken der Heckscheibe 11 gegenüber der Führungsschiene 13 beim Öffnen der Kofferraumklappe 2 ermöglicht. Das Schwenkgelenk ist in der Offenstellung der Heckscheibe 11 zweckmäßigerweise in einer Schwenkachse der Kofferraumklappe 2 angeordnet.

Eine Antriebssteuerung für den Deckel 9 und die Heckscheibe 11 kann derart ausgelegt sein, dass die Heckscheibe 11 in eine Lüfterstellung oder Teilöffnungsstellung nach hinten verfahrbar ist, während der Deckel 9 in seiner die Dachöffnung schließenden Schließstellung verbleibt. Die Heckscheibe 11 kann bei geschlossenem Deckel 9 auch gänzlich in ihre Offenstellung auf die Kofferraumklappe 2 verfahren werden.

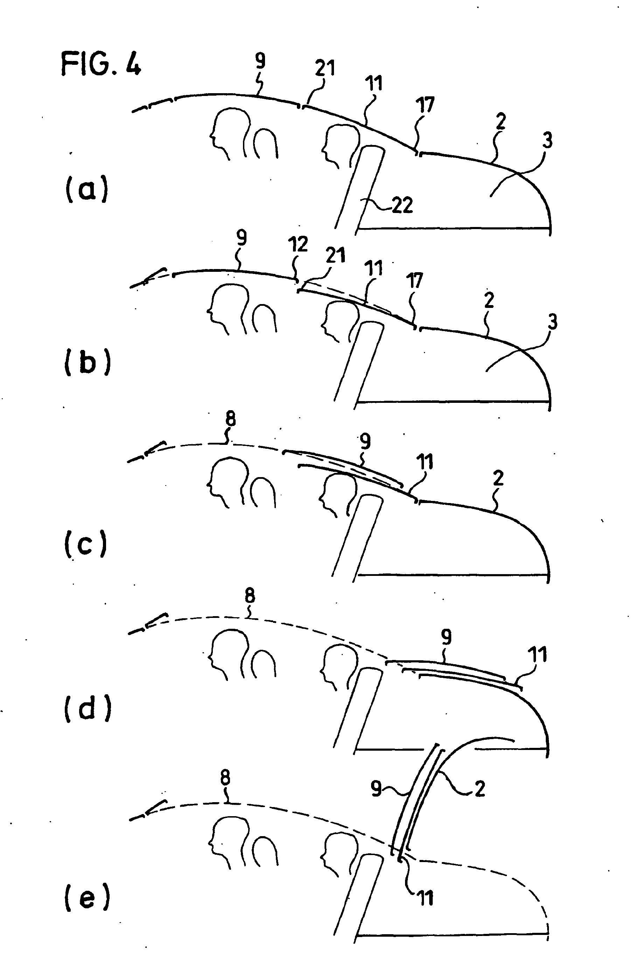

Zum Öffnen des Daches kann in alternativer Ausführung die Heckscheibe 11 um ihre Hinterkante 17 verschwenkt werden (siehe Fig. 4), indem ihre Vorderkante 21 geringfügig abgesenkt wird. Diese Stellung ist auch als Lüfterstellung einstellbar. Anschließend wird der Deckel 9 entlang der Führungsschiene 13 nach hinten über die derart abgesenkte Heckscheibe 11 gefahren und gemeinsam mit der Heckscheibe 11 auf die Kofferraumklappe 2 gefahren.

Hinter den an den Kofferraum 3 angrenzenden Sitzen 22, bei dem dargestellten Fahrzeug den Rücksitze, ist eine Schutzeinrichtung 23 angeordnet, die bei geöffnetem Dach und freier Dachöffnung im Bedarfsfall, z. B. bei einem Überschlag des Fahrzeugs, nach oben in eine Schutzstellung ausfahrbar ist. Die Schutzeinrichtung 23 ist z. B. als Überrollbügel ausgebildet.

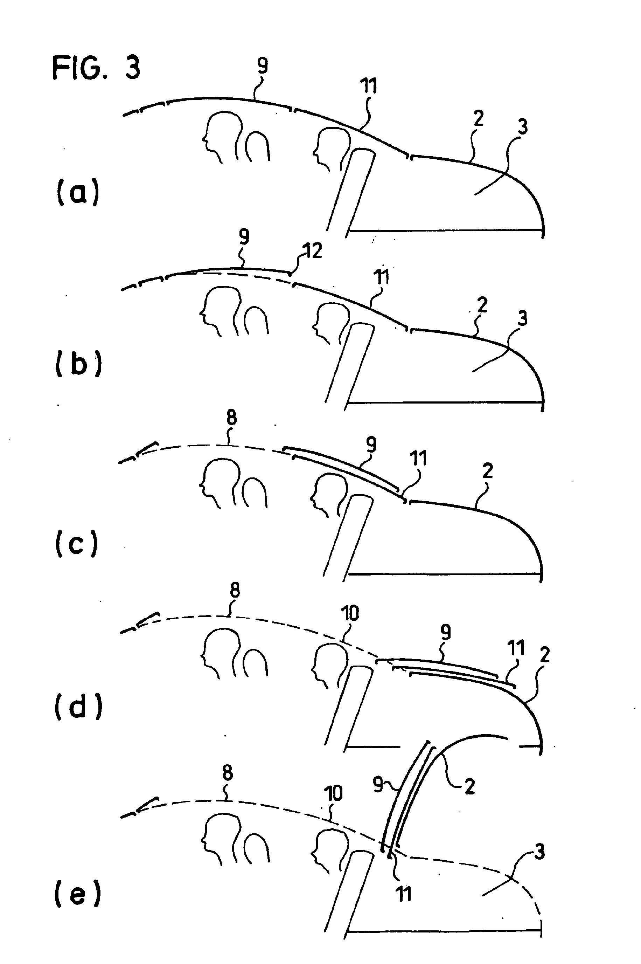

In der vollständig geöffneten Stellung des Fahrzeugdaches (siehe Fig. 3) ist somit eine einem Cabriolet ähnliche große Dachöffnung gebildet, wobei jedoch die Dachlängsholme 5 und die C-Säulen 7 in ihrer Position verbleiben und eine starre Struktur bilden, die im Falle eines Überschlags den Insassen einen hohen Schutz gewähren.

## Patentansprüche

1. Fahrzeug, insbesondere Limousine oder Coupé, mit einem Fahrzeugdach (4) mit karosseriefesten Dachlängsholmen (5), mit einer Dachöffnung (8) im Fahrzeugdach (4), mit einem bewegbaren Deckel (9) zum wahlweisen Schließen oder zumindest teilweisen Freigeben der Dachöffnung (8) sowie mit einer sich an das Fahrzeugdach (4) anschließenden Heckscheibe (11) und einer Kofferraumklappe (2), wobei der Deckel (9) und die Heckscheibe (11) mittels Führungseinrichtungen in eine Offenstellung verfahrbar sind, in der sie in Übereinanderlage angeordnet sind,
**dadurch gekennzeichnet,**
**dass** in der Offenstellung die Heckscheibe (11) auf der Kofferraumklappe (2) und der Deckel (9) auf der Heckscheibe (11) angeordnet sind.

2. Fahrzeug nach Anspruch 1,
**dadurch gekennzeichnet, dass** die Heckscheibe (11) seitliche Führungen zum verschiebbaren Aufnehmen einer Lagereinrichtung des Deckels (9) aufweist.

3. Fahrzeug nach Anspruch 1 oder 2,
**dadurch gekennzeichnet, dass** die Heckscheibe (11) und der Deckel (9) in der Offenstellung derart auf der Kofferraumklappe (2) angeordnet sind, dass die Kofferraumklappe (2) aufklappbar ist

4. Fahrzeug nach einem der Ansprüche 1 bis 3,
**dadurch gekennzeichnet, dass** jeder Dachlängsholm (5) eine vordere Führungsschiene (13) zum verschiebbaren Lagern des Deckels (9) und eine hintere Führungsschiene (14) zum,verschiebbaren Lagern der Heckscheibe (11) aufweist.

5. Fahrzeug nach Anspruch 4,
**dadurch gekennzeichnet, dass** die hintere Führungsschiene (14) an eine an der Kofferraumklappe (2) angeordnete Führung für die Heckscheibe (11) angrenzt.

6. Fahrzeug nach Anspruch 5,
**dadurch gekennzeichnet, dass** die beidseitigen Führungen für die Heckscheibe (11) an der Kofferraumklappe (2) verdeckt angeordnet sind.

7. Fahrzeug nach einem der Ansprüche 1 bis 6,
**dadurch gekennzeichnet, dass** die Kofferraumklappe (2) eine Trägereinrichtung (19) für die Heckscheibe (11) enthält.

8. Fahrzeug nach Anspruch 7,
**dadurch gekennzeichnet, dass** die Trägereinrichtung (19) an der Kofferraumklappe (2) fest oder aus einer abgesenkten Stellung in eine Betriebsstellung ausfahrbar angeordnet ist.

9. Fahrzeug nach Anspruch 8,
**dadurch gekennzeichnet, dass** die Position der Trägereinrichtung (19) in ihrer Betriebsstellung relativ zur Kofferraumklappe (2) verstellbar, insbesondere höheneinstellbar ist.

10. Fahrzeug nach Anspruch 8,
**dadurch gekennzeichnet, dass** die Trägereinrichtung (19) Führungsschienen für die Heckscheibe aufweist.

11. Fahrzeug nach einem der Ansprüche 1 bis 10,
**dadurch gekennzeichnet, dass** in einer Teilöffnungsstellung der Deckel (9) auf der Heckscheibe (11) angeordnet ist und dass zum vollständigen Öffnen des Daches die Heckscheibe (11) mit dem darauf angeordneten Deckel auf die Kofferraumklappe (2) fährt.

12. Fahrzeug nach einem der Ansprüche 1 bis 11,
**dadurch gekennzeichnet, dass** der Deckel (9) zu Beginn seiner öffnungsbewegung über die Heckscheibe (11) angehoben wird.

13. Fahrzeug nach einem der Ansprüche 1 bis 11,
**dadurch gekennzeichnet, dass** die Heckscheibe (11) an ihrer Vorderkante durch Verschwenken um ihre Hinterkante absenkbar ist.

14. Fahrzeug nach einem der Ansprüche 1 bis 13,
**dadurch gekennzeichnet, dass** der Deckel (9) bei seiner Öffnungsbewegung im wesentlichen entlang der Führungsschienen über die an ihrer Vorderkante abgesenkte Heckscheibe (11) verfahren wird.

15. Fahrzeug nach einem der Ansprüche 1 bis 14,
**dadurch gekennzeichnet, dass** dem Deckel (9) und der Heckscheibe (11) jeweils eine Antriebseinrichtung zugeordnet ist.

16. Fahrzeug nach einem der Ansprüche 1 bis 95,
**dadurch gekennzeichnet, dass** am Hinterrand der Heckscheibe (11) ein Antriebsmotor angeordnet ist.

17. Fahrzeug nach Anspruch 16,
**dadurch gekennzeichnet, dass** der Antriebsmotor der Heckscheibe (11) von einer insbesondere eine Bremsleuchte aufweisenden Abdeckung abgedeckt ist.

18. Fahrzeug nach einem der Ansprüche 1 bis 17,
**dadurch gekennzeichnet, dass** der Deckel (9) aus zumindest zwei hintereinander angeordneten Deckelteilen besteht.

19. Fahrzeug nach einem der Ansprüche 1 bis 18,
**dadurch gekennzeichnet, dass** die Heckscheibe (11) eine hintere Lagereinrichtung aufweist, die beim Öffnen der Heckscheibe in die Führungen der Kofferraumklappe (2) überführt wird.

20. Fahrzeug nach einem der Ansprüche 1 bis 19,
**dadurch gekennzeichnet, dass** eine ausfahrbare Kopfschutzeinrichtung für die Fahrzeuginsassen insbesondere an den Rücksitzen vorgesehen ist.

21. Fahrzeug nach einem der Ansprüche 1 bis 20,
**dadurch gekennzeichnet, dass** die Heckscheibe bei geschlossenem Deckel in eine Lüftungsstellung zu öffnen ist und insbesondere auf die Kofferraumklappe verfahrbar ist.

## Claims

1. Vehicle, in particular a saloon or coupé, having a vehicle roof (4) comprising roof longitudinal members (5) fixed to the body, having a roof opening (8) in the vehicle roof (4), having a movable panel (9) for the optional closure or at least partial exposure of the roof opening (8), and also having a rear window (11) adjoining the vehicle roof (4) and a boot lid (2), it being possible for the panel (9) and the rear window (11) to be moved by means of guide devices into an open position, in which they are arranged one above the other,
**characterized in that**
in the open position, the rear window (11) is arranged on the boot lid (2) and the panel (9) on the rear window (11).

2. Vehicle according to Claim 1, **characterized in that** the rear window (11) has lateral guides to accommodate a supporting device of the panel (9) such that it can be displaced.

3. Vehicle according to Claim 1 or 2, **characterized in that**, in the open position, the rear window (11) and the panel (9) are arranged on the boot lid (2) in such a way that the boot lid (2) can be folded up.

4. Vehicle according to one of Claims 1 to 3, **characterized in that** each roof longitudinal member (5) has a front guide rail (13) in order to mount the panel (9) such that it can be displaced, and a rear guide rail (14) in order to mount the rear window (11) such that it can be displaced.

5. Vehicle according to Claim 4, **characterized in that** the rear guide rail (14) adjoins a guide arranged on the boot lid (2) for the rear window (11).

6. Vehicle according to Claim 5, **characterized in that** the guides on both sides for the rear window (11) are arranged in a concealed manner on the boot lid (2).

7. Vehicle according to one of Claims 1 to 6, **characterized in that** the boot lid (2) contains a carrier device (19) for the rear window (11).

8. Vehicle according to Claim 7, **characterized in that** the carrier device (19) is arranged on the boot lid (2) in a fixed manner or such that it can be moved out of a lowered position into an operating position.

9. Vehicle according to Claim 8, **characterized in that** the position of the carrier device (19) in its operating position can be adjusted relative to the boot lid (2), in particular adjusted vertically.

10. Vehicle according to Claim 8, **characterized in that** the carrier device (19) has guide rails for the rear window.

11. Vehicle according to one of Claims 1 to 10, **characterized in that**, in a partly open position, the panel (9) is arranged on the rear window (11), and **in that**, in order to open the roof completely, the rear window (11) with the panel arranged thereon moves on to the boot lid (2).

12. Vehicle according to one of Claims 1 to 11, **characterized in that**, at the start of its opening movement, the panel (9) is raised above the rear window (11).

13. Vehicle according to one of Claims 1 to 11, **characterized in that** the rear window (11) can be lowered at its front edge by being pivoted about its rear edge.

14. Vehicle according to one of Claims 1 to 13, **characterized in that**, during its opening movement, the panel (9) is moved substantially along the guide rails over the rear window (11) lowered at its front edge.

15. Vehicle according to one of Claims 1 to 14, **characterized in that** the panel (9) and the rear window (11) are each assigned a drive device.

16. Vehicle according to one of Claims 1 to 15, **characterized in that** a drive motor is arranged at the rear edge of the rear window (11).

17. Vehicle according to Claim 16, **characterized in that** the drive motor of the rear window (11) is covered by a covering, in particular having a brake light.

18. Vehicle according to one of Claims 1 to 17, **characterized in that** the panel (9) comprises at least two panel parts arranged one behind the other.

19. Vehicle according to one of Claims 1 to 18, **characterized in that** the rear window (11) has a rear mounting device which, as the rear window is opened, is transferred into the guides of the boot lid (2).

20. Vehicle according to one of Claims 1 to 19, **characterized in that** an extendable head protection device is provided for the vehicle occupants, in particular on the rear seats.

21. Vehicle according to one of Claims 1 to 20, **characterized in that**, with the panel closed, the rear window can be opened into a ventilation position and, in particular, can be moved onto the boot lid.

## Revendications

1. Véhicule, notamment limousine ou coupé, comprenant un toit (4) muni de longerons (5) faisant corps avec la carrosserie ; une ouverture (8) pratiquée dans ledit toit (4) du véhicule ; un capot mobile (9) conçu pour provoquer, sélectivement, l'occultation ou le dégagement au moins partiel de ladite ouverture (8) du toit ; ainsi qu'une lunette arrière (11) se rattachant directement au toit (4) du véhicule, et un hayon (2) de coffre à bagages, sachant que le capot (9) et la lunette arrière (11) peuvent être amenés, au moyen de dispositifs de guidage, à une position ouverte dans laquelle ils sont agencés en superposition,
**caractérisé par le fait**
**que**, dans la position ouverte, la lunette arrière (11) repose sur le hayon (2) du coffre à bagages, et le capot (9) repose sur ladite lunette arrière (11).

2. Véhicule selon la revendication 1,
**caractérisé par le fait que** la lunette arrière (11) présente des guides latéraux pour recevoir, de manière coulissante, un système de montage du capot (9).

3. Véhicule selon la revendication 1 ou 2,
**caractérisé par le fait que** la lunette arrière (11) et le capot (9) sont disposés sur le hayon (2) du coffre à bagages, dans la position ouverte, de façon telle que ledit hayon (2) du coffre à bagages puisse être ouvert par pivotement.

4. Véhicule selon l'une des revendications 1 à 3,
**caractérisé par le fait que** chaque longeron (5) du toit comprend une glissière antérieure de guidage (13) en vue du montage coulissant du capot (9), et une glissière postérieure de guidage (14) en vue du montage coulissant de la lunette arrière (11).

5. Véhicule selon la revendication 4,
**caractérisé par le fait que** la glissière postérieure de guidage (14) est limitrophe d'un guide destiné à la lunette arrière (11) et situé sur le hayon (2) du coffre à bagages.

6. Véhicule selon la revendication 5,
**caractérisé par le fait que** les guides situés de part et d'autre, destinés à la lunette arrière (11), occupent des positions recouvertes sur le hayon (2) du coffre à bagages.

7. Véhicule selon l'une des revendications 1 à 6,
**caractérisé par le fait que** le hayon (2) du coffre à bagages renferme un dispositif de support (19) dédié à la lunette arrière (11).

8. Véhicule selon la revendication 7,
**caractérisé par le fait que** le dispositif de support (19) est agencé, sur le hayon (2) du coffre à bagages, de manière fixe ou avec faculté de déploiement depuis une position abaissée jusqu'à une position de fonctionnement.

9. Véhicule selon la revendication 8,
**caractérisé par le fait que** l'emplacement du dispositif de support (19) peut être ajusté et notamment réglé en hauteur, dans sa position de fonctionnement, vis-à-vis du hayon (2) du coffre à bagages.

10. Véhicule selon la revendication 8,
**caractérisé par le fait que** le dispositif de support (19) comporte des glissières de guidage affectées à la lunette arrière.

11. Véhicule selon l'une des revendications 1 à 10,
**caractérisé par le fait que** le capot (9) se trouve sur la lunette arrière (11) dans une position d'ouverture partielle; et **par le fait que**, pour ouvrir intégralement le toit, ladite lunette arrière (11), et le capot qui s'y trouve, se meuvent vers le hayon (2) du coffre à bagages.

12. Véhicule selon l'une des revendications 1 à 11,
**caractérisé par le fait que** le capot (9) est soulevé au-delà de la lunette arrière (11) au début de son mouvement d'ouverture.

13. Véhicule selon l'une des revendications 1 à 11,
**caractérisé par le fait que** la lunette arrière (11) peut être abaissée sur son bord antérieur, par pivotement autour de son bord postérieur.

14. Véhicule selon l'une des revendications 1 à 13,
**caractérisé par le fait que**, lors de son mouvement d'ouverture, le capot (9) est pour l'essentiel déplacé le long des glissières de guidage, au-dessus de la lunette arrière (11) abaissée sur son bord antérieur.

15. Véhicule selon l'une des revendications 1 à 14,
**caractérisé par le fait qu'**un dispositif d'entraînement est respectivement affecté au capot (9) et à la lunette arrière (11).

16. Véhicule selon l'une des revendications 1 à 15,
**caractérisé par le fait qu'**un moteur d'entraînement est implanté sur le bord postérieur de la lunette arrière (11).

17. Véhicule selon la revendication 16,
**caractérisé par le fait que** le moteur d'entraînement de la lunette arrière (11) est recouvert d'une coiffe notamment pourvue d'un feu stop.

18. Véhicule selon l'une des revendications 1 à 17,
**caractérisé par le fait que** le capot (9) se compose d'au moins deux parties agencées en succession mutuelle.

19. Véhicule selon l'une des revendications 1 à 18,
**caractérisé par le fait que** la lunette arrière (11) offre un système postérieur de montage qui, lors de l'ouverture de ladite lunette arrière, est transféré dans les guides du hayon (2) du coffre à bagages.

20. Véhicule selon l'une des revendications 1 à 19,
**caractérisé par** la présence, notamment sur les sièges arrière, d'un dispositif protège-tête déployable, destiné aux occupants dudit véhicule.

21. Véhicule selon l'une des revendications 1 à 20,
**caractérisé par le fait que**, lorsque le capot est fermé, la lunette arrière peut être ouverte jusqu'à une position de ventilation et peut, en particulier, être déplacée vers le hayon du coffre à bagages.
